# EUROPEAN PATENT SPECIFICATION

(11) **EP 0 390 813 B1**
(45) Date of publication and mention of the grant of the patent: **03.11.1993**
(21) Application number: 88910041.8
(22) Date of filing: 14.11.1988
(51) Int. Cl.: B65G 1/04, B65G 1/06

(54) **METHOD AND STORE FOR STORING PAPER ROLLS**
VERFAHREN UND MAGAZIN ZUM LAGERN VON PAPIERROLLEN
PROCEDE ET MAGASIN POUR STOCKER DES ROULEAUX DE PAPIER

(30) Priority: 12.11.1987 FI 874991; 24.03.1988 DE 3809943
(43) Date of publication of application: 10.10.1990
(73) Proprietor: KONE OY, 00330 Helsinki 33 (FI)
(72) Inventor: VAINIO, Frans, SF-02400 Kirkkonummi (FI); HILBER, Walter, D-71672 Marbach (DE)
(74) Representative: Zipse + Habersack
(86) International application number: PCT/FI88/00185
(87) International publication number: WO 89/04284

(56) References cited:
- EP-A- 0 075 975
- SE-B- 440 063
- US-A- 3 738 506
- US-A- 4 268 207

## Description

The present invention relates to a method and a store for storing paper rolls.

FI-A-864 705 discloses a similar method and store for storing paper rolls. US-A-4,459,078 discloses a store with a lifting means and two different sorts of trucks on which cuboid loads are carried into elongated shelf corridors which are arranged in several floors. This store allows an automatic load handling to any desired shelf corridor in the shelf. However, this store needs a complicated transport system with two different sorts of trucks.

US-A-3,738,506 discloses a storage system with a shelf having several shelf corridors arranged in several floors. Cuboid loads are handled in this store by means of a lifting means which carries a transport carriage. The transport carriage is guided in tracks which are provided in the lifting means and in the shelf corridors. The load is supported on pallets which are deposited by the fork lift of the transport carriage on the upper side of the tracks. However, when handling paper rolls with this type of storing means, there would be a risk of dammaging the circumference of the paper rolls. For this reason it is an object of the invention to provide a method and a store for storing paper rolls of different sizes in a safe and convenient manner by optimizing the utilization of the storage space.

In a method and a store of the aforementioned type this object is solved by the method of claim 1 and a store according to claim 3. Advantageous embodiments of the invention are subject matter of the corresponding subclaims.

The method of the invention is characterized the features of claim 1. The invention makes it possible to optimize the utilization of the storage space in both vertical and horizontal directions. Thus, e.g. in the lengthwise direction of a shelving corridor, the corridor may accommodate a larger number of short rolls than of long rolls, which means that the utilization rate of the store can be optimized. The utilization rate is calculated and optimized by a computer.

According to the invention the paper rolls are brought into the store in a recumbent position preferably by a forklift truck and deposited on a reception station, where the transport carriage of the storing means picks them up either singly or several rolls at a time and takes them to the storing means, which then moves to a definite place in the store, whereupon the transport carriage takes the roll(s) into a shelf corridor being provided with a storage support adapted to the circular form of the roll. As the rolls are thus held in a recumbent position throughout the storage process, they are very unlikely to be damaged and the storage space in the shelf can be utilized to the optimum. Paper rolls of a given size are always stored in the same shelf corridor, reserved for the roll size in question.

According to the invention, the store comprises a storage shelf with shelf corridors arranged in several floors and a storing means for moving the paper rolls in the storage shelf. The storing means comprises a horizontally movable lifting means for carrying a transport carriage from a reception station to the shelf corridors and vice versa, and the transport carriage supported by the lifting means being designed to handle the paper rolls in a recumbent position. The shelf corridors are provided with a storage support which is adapted to the circular form of the rolls and with running tracks for the transport carriage, so that the transport carriage is able to enter the shelf corridors to deposit and retrieve paper rolls.

The invention permits optimal utilization of the storage space in vertical as well as lengthwise and sideways directions. In principle, such a store with the necessary equipment can be built in any space.

An embodiment of the invention is characterized in that the carriage support of the lifting means can be rotated through 180° around its vertical axis so as to allow the transport carriage resting on it to be turned in such manner that the carriage is able to move forwards, i.e. with the lifting fork first, into the shelf corridors on both sides of the lifting means. Thus the transport carriage can serve two separate sets of storage shelves on either side of the lifting means.

An embodiment of the invention is further characterized in that each shelf corridor is provided with a pair of U-shaped tracks connected to each other by a storage support with a concave carrier surface on which the paper rolls can be deposited for storage, said U-shaped tracks serving as running tracks for the wheels of the transport carriage. Such a solution is cheap and prevents the outer layer of the paper roll from being damaged by the weight of the roll itself, because the supporting surface of the roll is sufficiently large.

The carrier surface may also consist e.g. of a bandlike or similar structure which is attached to a supporting wall and sustains high tensile stresses. Due to the weight of the paper roll, the carrier surface undergoes an elastic deformation that allows it to adapt to the circular form of the roll. For this adaptation, the elasticity of the supporting wall itself is also utilized.

According to a prefered embodiment of the invention according to claims 8 to 10 an elastic steel plate is used as a carrier surface, said plate being of a sufficiently thin construction to permit elastic deformation and adaptation to the circumferential form of the paper roll as required. Since the carrier surface is only subject to tensile forces, a relatively thin plate can be used in this solution.

The features in claims 12 and 13 represent structural simplifications and possibilities of achieving the desired adaptation of the carrier surface to the cirucmferential form of the paper rolls in a simple manner. The features of the solution in claim 15 prevent deflection of the carrier surface at the supporting walls.

The invention is described in the following by the aid of an example, referring to the drawings attached, wherein:

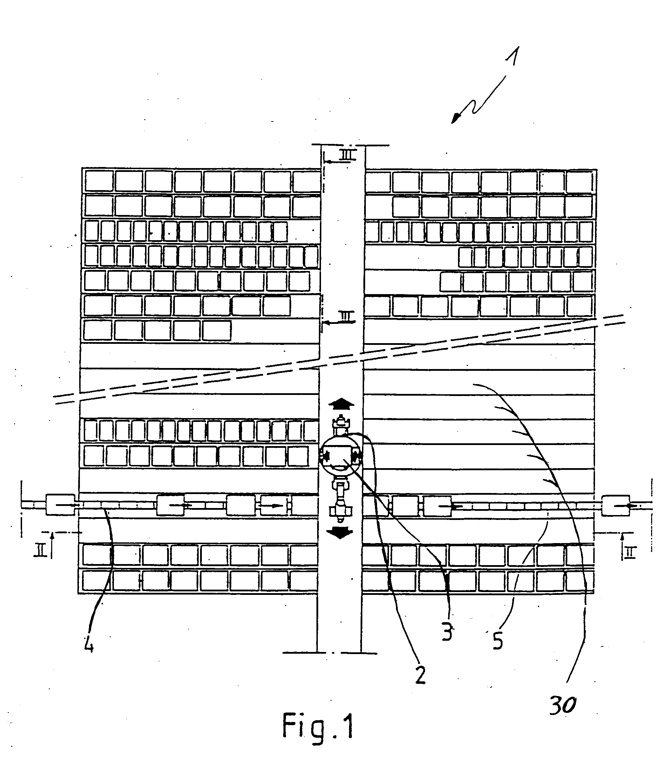

Fig. 1 represents the store in top view.

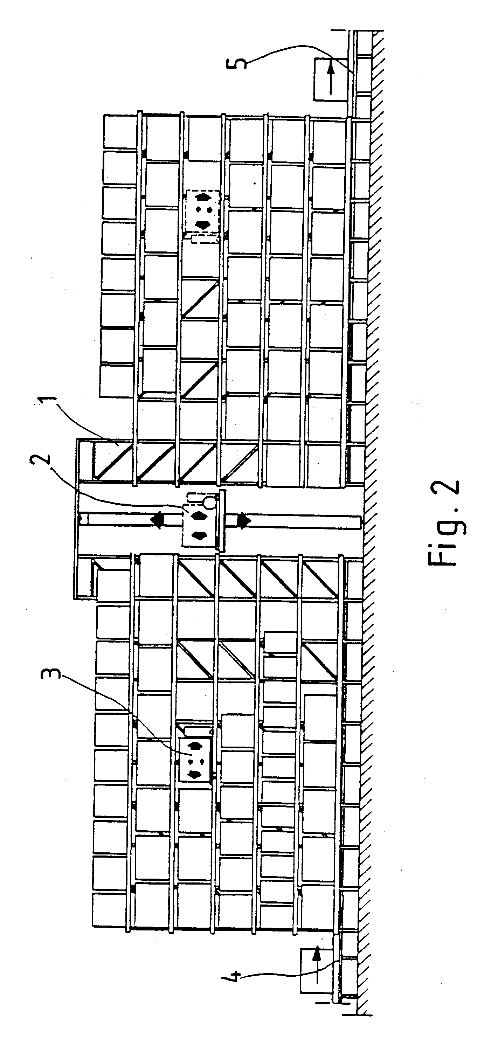

Fig. 2 shows a section through the store in fig. 1 along line II-II.
Fig. 3 shows a section through the store in fig. 1 along line III-III.
Fig. 4 shows the transport carriage with a paper roll in an oblique top view.
Fig. 5 shows a magnified section through the running track in fig. 4 along line V-V.
Fig. 6 shows a corresponding section through the running track of a different embodiment.

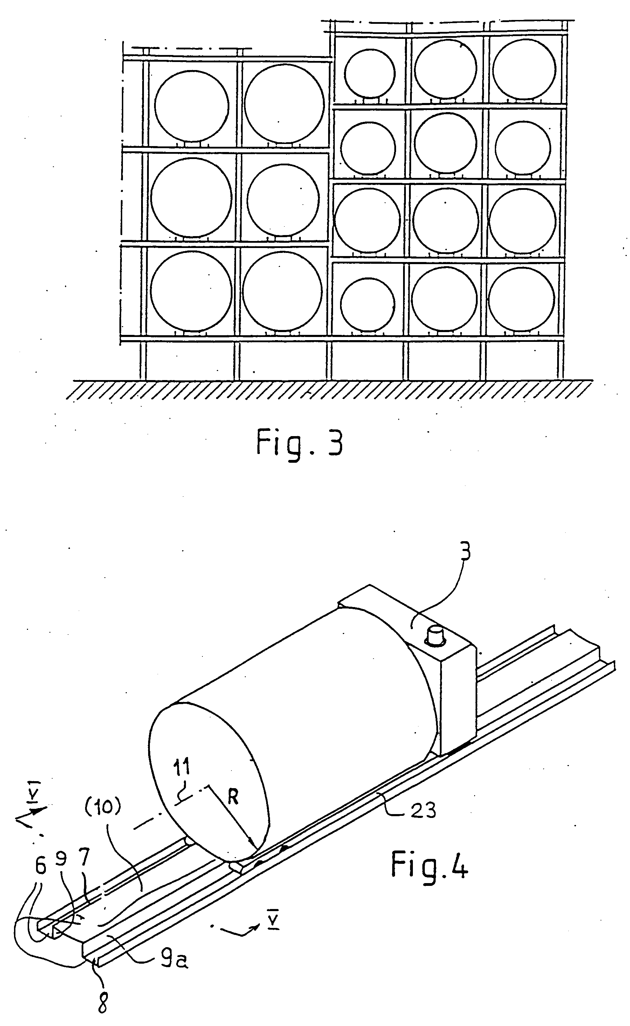

The store is filled using a fork-lift truck 3 as a transport carriage by bringing one or more paper rolls at a time to the reception station 4, where the rolls are deposited in succession, forming a line. The rolls are held in a recumbent position when they are brought in. At this stage, the data relating to the dimensions and paper quality of each roll are automatically read from a bar code into the memory of the control system of the store, or the data are input via a manual switch by the truck operator. The transport carriage 3 of a lifting means 2 takes the paper roll from the reception station to the lifting means which then moves the carriage and the paper roll resting on it to a given location in the store, from where the transport carriage 3 takes the roll further into the appropriate corridor 30 in the shelf. In this manner, the corridors 30 are filled with paper rolls. When a processing machine needs a given paper roll, the lifting means first finds the corridor, whereupon the transport carriage 3 fetches the paper roll from the corridor 30 and brings it to the lifting means, which then takes the carriage and the paper roll resting on it to the delivery station 5, from where the roll is further transported to the processing machine with a fork-lift truck or an automatically guided vehicle. The store consists of two opposite shelf blocks, between which the lifting means moves. The lifting means 2 is provided with a carriage support which can be rotated through 180° around its vertical axis so as to allow the transport carriage 3 resting on it to be turned in such manner that it is able to enter the shelf corridors 30 on both sides of the lifting means moving forwards, i.e. with the lifting fork first. According to Fig. 4 the shelf corridors 30 are provided with U-shaped tracks 6 connected to each other by a concave carrier plate 10 on which the paper rolls can be deposited for storage, said U-shaped tracks 6 serving as running tracks for the wheels of the transport carriage 3. Since the paper rolls are held in a recumbent position at all stages of the storage process, there is no risk of rolls falling over, which is often possible when the rolls are stored in an upright position one above the other. The method and apparatus of the invention permit an optimal utilization of the capacity of the store.

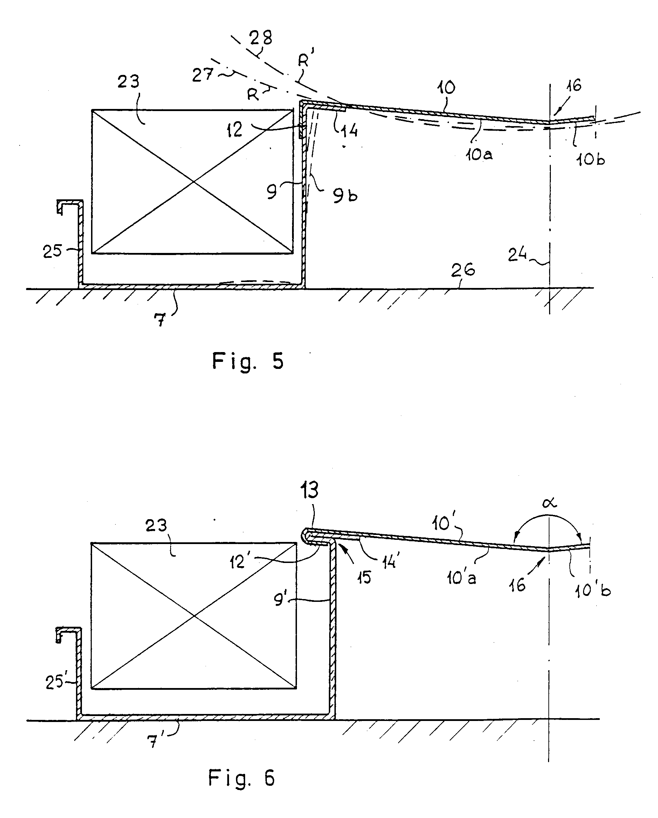

As illustrated by fig. 5, showing only the left-hand profile 7 of the running track 6 - the right-hand profile 8 (Fig. 4) is arranged in mirror symmetry on the other side of the mirror plane 24 - the profile 7 is a rectangular U-profile provided with a high supporting wall 9 on the side facing the other rectangular profile 8, said supporting wall 9 being higher than the other side wall 25 of the profile. The rectangular profiles 7 and 8, the latter being omitted in the figure, are fixedly mounted on the bottom 26 of the storage shelf 1. In a certain embodiment, the profiles 7 and 8 are made of a steel plate.

The top edge of the supporting wall 9 of the rectangular profile 7 is bent into an angle towards the other profile 8 (not shown) so as to form a protrusion 14 serving as a seat for the carrier plate 10. The bent edge 12 of the carrier plate 10 is attached to the upper part of the supporting wall 9 e.g. with screws, said plate 10 consisting of an elastic steel plate which is thinner than the material of the rectangular profile 7. The carrier plate 10 is provided with a deflection 16 along the line of the mirror plane 24, said deflection 16 being produced when the two equal portions 10a and 10b of the plate meet in an obtuse angle α of about 170°. Thus, a carrier surface 10 for the paper rolls is provided in the middle between the running tracks 7,8 thus formed. Fig. 5 illustrates the deformations of the elastic plate 10 caused by the weight of the paper roll 2, and also the deformations occurring simultaneously in the upper part 9b of the supporting wall 9. When a paper roll 2 of diameter R is placed on the carrier plate 10, the weight of the roll causes the plate 10 to adapt to the form of the circumference 27 of the roll. The same occurs when a roll of a smaller diameter R' is deposited on the plate, but in this case both the carrier plate 10 and the supporting wall 9 undergo a larger deformation than in the case of a roll with a larger diameter. In any case, the result is that the carrier surface 10 is adapted in the required manner to the form of the circumference 27 or 28 of the paper roll. Thus, the bearing surface at the circumference of the paper roll 2 is large enough to prevent any flattening or undesirable deformation of the outer layer of the roll 2.

Instead of a steel plate 10, it is also possible to use a mat made of a plastic or textile material and having a sufficient tensile strength. As the mat is essentially subject only to the tensile forces resulting from the weight of the paper rolls, such a mat may be applicable as a carrier surface 10.

Fig. 6 shows how the mounting of the carrier surface 10, again consisting of a plate, can be implemented in a very simple manner by bending the edges 12' of the plate 10' around a step-shaped protrusion 13 pointing outwards toward the other side 25' of the rectangular profile 7'. When the upper edge of the supporting wall 9' is folded as shown, the result is a seat protrusion 14' which is analogous to the protrusion 14 in fig. 5, transmitting the undesirable deformation of the carrier plate 10' in the seat region to the supporting wall 9'. In other respects, the design of the carrier plate 10' is analogous to the embodiment in fig. 5. Naturally the deflection 16 can be omitted. However, the embodiment presented provides the advantage that, when a paper roll is first deposited on the plate 10, it touches the plate along two lines of contact instead of one. This makes it possible to avoid undesirable effects on the outer layer of the paper roll.

## Claims

1. Method for storing paper rolls in a store comprising a storage shelf with shelf corridors (30) arranged in several floors and storing means for moving the paper rolls in the storage shelf, the storing means comprising a horizontally movable lifting means (2) for carrying a transport carriage (3) from a reception station (4) to the shelf corridors (30) and vice versa, the transport carriage (3) handling the paper rolls in a recumbent position, the shelf corridors (30) being provided with a storage support (10) adapted to the circular form of the rolls and a running track (6) for the transport carriage (3), and the transport carriage (3) entering the shelf corridors (30) to deposit and retrieve paper rolls.

2. Method according to claim 1,
wherein the location of a paper roll to be handled is determined by a storage control computer.

3. Store for storing paper rolls, comprising a storage shelf with shelf corridors (30) arranged in several floors and storing means for moving the paper rolls in the storage shelf, the storing means comprising a horizontally movable lifting means (2) for carrying a transport carriage (3) from a reception station (4) to the shelf corridors (30) and vice versa, the transport carriage (3) being designed to handle the paper rolls in a recumbent position, the shelf corridors (30) being provided with a storage support (10) adapted to the circular form of the rolls and running tracks (6) for the transport carriage (3), and the transport carriage (3) being able to enter the shelf corridors (30) to deposit and retrieve the paper rolls.

4. Store according to claim 3,
characterized in that a support of the lifting means (2) for the transport carriage (3) is rotatable through 180° around its vertical axis so as to allow the transport carriage (3) resting on it to be turned in such a manner that the transport carriage (3) is able to enter the shelf corridors (30) on both sides of the lifting means (2) forwardly, i.e. with the lifting fork first.

5. Store according to claim 3 or 4,
characterized in that the storage support (10) for the paper rolls and the running track (6) for the transport carriage (3) are combined.

6. Store according to claim 3, 4 or 5, characterized in that each shelf corridor (30) is provided with a pair of U-shaped tracks (6) connected to each other by a concave surface (10) on which the paper rolls can be deposited for storage, said U-shaped tracks (6) serving as running tracks for the wheels of the transport carriage (3).

7. Store according to claim 3, 4 or 5, characterized in that each running track (6) consists of two parallel members, both of which are provided with a high supporting wall (9, 9a, 9') on the side facing the other member, said wall serving as a support for a flexible carrier surface (10) between the two members, the paper rolls (2) being placed on said carrier surface with their rolling axis (11) parallel to the track (6).

8. Store according to claim 7, characterized in that the carrier surface (10) consists of an elastic plate.

9. Store according to claim 8, characterized in that the plate (10) is provided with a deflection (16) along the middle line between the supporting walls (9,9a).

10. Store according to claim 7 or 8, characterized in that the deflection (16) is formed by two essentially planar portions of the plate (10) meeting at an obtuse angle (α) of approx. 160 - 170°.

11. Store according to any one of the claims 7-10, characterized in that the plate (10) is provided with bent longitudinal edges (12) which serve to attach it to the supporting walls (9, 9a).

12. Store according to claim 11, characterized in that the bent longitudinal edges (12') are suspended on protrusions (13) or the supporting walls (9,9'), said protrusions pointing in the direction away from the adjacent supporting wall.

13. Store according to any one of the claims 7-12, characterized in that the supporting walls (9,9a) consist of tall, vertical, elastically flexible fillets of laminated springs.

14. Store according to claim 13, characterized in that the supporting walls (9, 9a) are parts of U-profile tracks guiding the wheels of the transport carriage (3).

15. Store according to any one of the claims 7-13, characterized in that the upper ends of the supporting walls (9, 9a) are provided with transverse protrusions (14) serving as seats for the two portions of the carrier surface (10).

16. Store according to claim 12 or 15, characterized in that the seat protrusions (14) or the protrusions (13) consist of bent or folded upper edges (15) of the supporting walls (9, 9a).

## Patentansprüche

1. Verfahren zum Lagern von Papierrollen in einem Magazin, das ein Lagerregal mit in mehreren Stockwerken angeordneten Regalgängen (30) und eine Lagervorrichtung zum Bewegen der Papierrollen in dem Lagerregal aufweist, wobei die Lagervorrichtung eine horizontal bewegbare Hebevorrichtung (2) zum Tragen eines Transportwagens (3) von einer Aufnahmestation (4) zu den Regalgängen (30) und vice versa umfaßt, wobei der Transportwagen (3) die Papierrollen (4) in einer liegenden Position handhabt, und wobei die Regalgänge (30) mit einer an die kreisrunde Form der Rollen angepaßten Lagerabstützung (10) und mit einer Laufschiene (6) für den Transportwagen (3) versehen sind, wobei der Transportwagen (3) in die Regalgänge (30) zur Ablage und Aufnahme von Papierrollen einfährt.

2. Verfahren nach Anspruch 1,
bei dem der Lagerplatz einer handzuhabenden Papierrolle durch einen Lagerkontrollcomputer bestimmt wird.

3. Magazin zur Lagerung von Papierrollen, mit
- einem Lagerregal mit in mehreren Stockwerken angeordneten Regalgängen (30) und einer Lagervorrichtung zum Bewegen der Papierrollen in dem Lagerregal, wobei die Lagervorrichtung eine horizontal bewegliche Hebevorrichtung (2) zum Tragen eines Transportwagens (3) von einer Aufnahmestation (4) zu den Regalgängen (30) und vice versa aufweist, wobei der Transportwagen (3) zur Handhabung der Papierrollen in einer liegenden Position ausgebildet ist, die Regalgänge (30) mit einer an die kreisrunde Form der Rollen angepaßten Lagerabstützung (10) und mit einer Laufschiene (6) für den Transportwagen (3) versehen sind, wobei der Transportwagen (3) in der Lage ist, in die Regalgänge (30) zur Ablage und Aufnahme der Papierrollen hineinzufahren.

4. Magazin nach Anspruch 3,
dadurch **gekennzeichnet**,
daß eine Abstützung der Hebevorrichtung (2) für den Transportwagen (3) 180° um seine vertikale Achse rotierbar ist, um es so zu ermöglichen, daß ein darauf befindlicher Transportwagen (3) in derartiger Weise gedreht wird, daß dieser in der Lage ist, in die Regalgänge (30) auf beiden Seiten der Hebevorrichtung (2) vorwärts, d.h. mit der Hebegabel voraus, einzufahren.

5. Magazin nach Anspruch 3 oder 4,
dadurch **gekennzeichnet**,
daß die Lagerabstützung (10) für die Papierrollen und die Laufschiene (6) für den Transportwagen (3) miteinander verbunden sind.

6. Magazin nach den Ansprüchen 3, 4 oder 5,
dadurch **gekennzeichnet**,
daß jeder Regalgang (30) mit einem Paar U-förmiger Schienen (6) versehen ist, die miteinander über eine konkave Oberfläche (10) verbunden sind, auf welcher die Papierrollen zur Lagerung abgelegt werden können, wobei die U-förmigen Schienen (6) als Laufschienen für die Räder des Transportwagens (3) dienen.

7. Magazin nach den Ansprüchen 3, 4 oder 5,
dadurch **gekennzeichnet**,
daß jede Laufschiene (6) aus zwei parallelen Teilen besteht, die jeweils mit einer hohen Stützwand (9,9a,9') auf der Seite versehen sind, die zum anderen Teil hinweist, wobei die Wand als Abstützung für eine flexible Trägerfläche (10) zwischen den beiden Teilen dient und die Papierrollen (2) auf dieser Trägerfläche mit ihrer Rollenachse (11) parallel zur Schiene (6) angeordnet werden.

8. Magazin nach Anspruch 7,
dadurch **gekennzeichnet,**
daß die Trägerfläche (10) aus einer elastischen Platte besteht.

9. Magazin nach Anspruch 8,
dadurch **gekennzeichnet**,
daß die Platte (10) mit einer Biegung (16) entlang der Mittenlinie zwischen den stützwänden (9,9a) versehen ist.

10. Magazin nach Anspruch 7 oder 8,
dadurch **gekennzeichnet**,
daß die Biegung (16) durch zwei im wesentlichen plane Abschnitte der Platte (10) gebildet ist, die sich in einem stumpfen Winkel (α) von ungefähr 160 bis 170° treffen.

11. Magazin nach einem der Ansprüche 7 bis 10,
dadurch **gekennzeichnet**,
daß die Platte (10) mit gebogenen Längskanten (12) versehen ist, die zur Befestigung an den Stützwänden (9,9a) dienen.

12. Magazin nach Anspruch 11,
dadurch **gekennzeichnet**,
daß die gebogenen Längskanten (12') an Vorsprüngen (13) der Stützwände (9,9') aufgehängt sind, wobei diese Vorsprünge jeweils von der benachbarten Stützwand wegweisen.

13. Magazin nach einem der Ansprüche 7 bis 12,
dadurch **gekennzeichnet**,
daß die Stützwände (9,9a) aus hohen, vertikalen, elastischen, flexiblen Leisten laminarer Federn bestehen.

14. Magazin nach Anspruch 13,
dadurch **gekennzeichnet**,
daß die Stützwände (9,9a) Teile der U-Profilschienen für die Räder des Transportwagens (3) sind.

15. Magazin nach einem der Ansprüche 7 bis 13,
dadurch **gekennzeichnet,**
daß die oberen Enden der stützwände (9,9a) mit transversalen Vorsprüngen (14) versehen sind, die als Auflage für zwei Abschnitte der Trägerfläche (10) dienen.

16. Magazin nach Anspruch 12 oder 15,
dadurch **gekennzeichnet**,
daß die Auflagevorsprünge (14) oder die Vorsprünge (13) aus gebogenen oder geknickten oberen Kanten (15) der Stützwände (9,9a) bestehen.

## Revendications

1. Procédé de stockage de rouleaux de papier dans un magasin comprenant un rayonnage à couloirs (30) agencés en plusieurs niveaux et un dispositif de stockage pour déplacer les rouleaux de papier dans le rayonnage, le dispositif de stockage comprenant un dispositif de levage (2) déplaçable horizontalement pour amener un chariot de transport (3) d'une station de réception (4) aux couloirs (30) du rayonnage et vice versa, le chariot de transport (3) véhiculant les rouleaux de papier en position couchée, les couloirs de rayonnage (30) comportant un support de stockage (10) adapté à la forme des rouleaux et une voie de déplacement (6) pour le chariot de transport (3), et le chariot de transport (3) entrant dans les couloirs (30) du rayonnage pour déposer et reprendre les rouleaux de papier.

2. Procédé suivant la revendication 1, dans lequel l'emplacement d'un rouleau de papier à manipuler est déterminé par un ordinateur de commande de stockage.

3. Magasin pour stocker des rouleaux de papier, comprenant un rayonnage à couloirs (30) agencés en plusieurs niveaux et un dispositif de stockage pour déplacer les rouleaux de papier dans le rayonnage, le dispositif de stockage comprenant un dispositif de levage horizontalement déplaçable (2) pour amener un chariot de transport (3) d'une station de réception (4) aux couloirs (30) et vice versa, le chariot de transport (3) étant prévu pour recevoir les rouleaux de papier en position couchée, les couloirs (30) du rayonnage comportant un support de stockage (10),adapté à la forme circulaire des rouleaux, et des voies (6) pour le déplacement du chariot de transport (3), et le chariot de transport (3) pouvant entrer dans les couloirs (30) pour déposer et reprendre les rouleaux de papier.

4. Magasin suivant la revendication 3, caractérisé en ce que le dispositif de levage (2) comprend un support pour le chariot de transport (3) qui peut tourner de 180° autour de son axe vertical afin de permettre l'orientation du chariot de transport (3), reposant sur ledit support, d'une manière telle que le chariot de transport (3) peut entrer dans les couloirs de rayonnage (30) des deux côtés du dispositif de levage (2) en marche avant, c'est-à-dire avec la fourche de levage en premier.

5. Magasin suivant la revendication 3 ou 4, caractérisé en ce que le support de stockage (10) pour les rouleaux de papier et la voie de roulement (6) pour le chariot de transport (3) sont combinés.

6. Magasin suivant la revendication 3,4 ou 5, caractérisé en ce que chaque couloir de rayonnage (30) comporte deux rails en forme de U (6) reliés l'un à l'autre par une surface concave (10) sur laquelle les rouleaux de papier peuvent être déposés pour stockage, les dits rails à profil en U (6) servant de voies pour les roues du chariot de transport (3).

7. Magasin suivant la revendication 3,4 ou 5, caractérisé en ce que chaque voie (6) est constituée de deux éléments parallèles, comportant tous deux une paroi support haute (9,9a,9') du côté situé vers l'autre élément,ladite paroi servant de support pour une surface de portée flexible (10) placée entre les deux éléments, les rouleaux de papier (2) étant placés sur la dite surface de portée de sorte que leur axe d'enroulement (11) est parallèle à la voie (6).

8. Magasin suivant la revendication 7, caractérisé en ce que la surface de portée (10) consiste en une plaque élastique.

9. Magasin suviant la revendication 8, caractérisé en ce que la plaque (10) présente une flèche ou région concave (16) le long de la ligne centrale entre les parois de support (9,9a).

10. Magasin suivant la revendication 7 ou 8, caractérisé en ce que la flèche (16) est définie par deux parties sensiblement planes de la plaque (10) se rejoignant suivant un angle obtus (α) de 160 à 170° environ.

11. Magasin suivant une quelconque des revendications 7 à 10, caractérisé en ce que la plaque (10) comporte des bords longitudinaux pliés (12) qui servent à l'attacher aux parois de support (9,9a).

12. Magasin suivant la revendication 11, caractérisé en ce que les bords longitudinaux pliés (12') sont suspendus sur des saillies (13) des parois (9, 9'), lesdites saillies pointant en dehors de la paroi support adjacente.

13. Magasin suivant une quelconque des revendications 7 à 12, caractérisé en ce que les parois de support (9,9a) sont de grands éléments verticaux élastiquement flexibles de ressorts laminés.

14. Magasin suivant la revendication 13, caractérisé en ce que les parois de support (9,9a) sont des parties des rails à profil en U qui guident les roues du chariot de transport (3).

15. Magasin suivant une quelconque des revendications 7 à 13, caractérisé en ce que les extrémités supérieures des parois de support (9,9a) comportent des saillies transversales (14) servant de sièges pour les deux parties de la surface de portée (10).

16. Magasin suivant la revendication 12 ou 15, caractérisé en ce que les saillies formant siège (14) ou les saillies (13) sont constituées par les bords supérieurs pliés ou rabattus (15) des parois de support (9,9a).
